# EUROPÄISCHE PATENTSCHRIFT

(11) **EP 1 895 173 B1**
(45) Veröffentlichungstag und Bekanntmachung des Hinweises auf die Patenterteilung: **10.08.2011**
(21) Anmeldenummer: 07115006.4
(22) Anmeldetag: 27.08.2007
(51) Int. Cl.: F16B 25/00, F16B 33/02, F16B 13/12

(54) **Befestigungsanornung mit aufweitbaren Dübelhülse und Spreizschraube**
Fastening assembly comprising an expandable dowel sleeve and an expanding screw
Dispositif de fixation comprenant une douille expansible et une vis d'expansion

(30) Priorität: 04.09.2006 DE 102006000438
(43) Veröffentlichungstag der Anmeldung: 05.03.2008
(73) Patentinhaber: HILTI Aktiengesellschaft, 9494 Schaan (LI)
(72) Erfinder: Zimmerer, Claudia, 88131 Lindau (DE)
(74) Vertreter: Wildi, Roland

(56) Entgegenhaltungen:
- EP-A2- 1 223 354
- DE-A1- 2 132 755
- DE-A1- 3 043 478
- US-A- 3 861 269

## Beschreibung

Die Erfindung betrifft eine Befestigungsanordnung mit einer aufweitbaren Dübelhülse mit einem Spreizbereich und einer Spreizschraube für die aufweitbare Dübelhülse, wobei die Spreizschraube einen Schaft aufweist, der an einem ersten Ende ein Drehangriffsmittel und ausgehend von einem zweiten Ende wenigstens einen ersten Gewindegang aufweist.

Für Befestigungen von Anbauteilen, insbesondere für eine Durchsteckmontage, werden in Voll- und Hohluntergründe verankerbare Anordnungen mit einer aufweitbaren Dübelhülse und einer Spreizschraube als Spreizelement für die Dübelhülse verwendet. Die beispielsweise aus Kunststoff gefertigte Dübelhülse wird in ein zuvor erstelltes Bohrloch eingeführt und mittels der in die Dübelhülse eingetriebenen oder eingeschraubten Spreizschraube aufgeweitet. Das Material der Dübelhülse wird im Bohrloch verdrängt, wobei ein Reib-/Formschluss an der Bohrlochwandung erzeugt wird. Um hohe Lastwerte mit der erstellten Befestigung zu erreichen, sind hohe von der Spreizschraube erzeugte Spreizkräfte erwünscht.

Um die Spreizkräfte zu erhöhen, ist es z. B. aus der DE 30 12 177 A bekannt, den Kemdurchmesser des Schafts der Spreizschraube grösser als den Kerndurchmesser des Schafts im Bereich des Gewindeabschnitts der Spreizschraube sowie die axiale Erstreckung des Spreizbereichs der Dübelhülse länger als die axiale Erstreckung des Gewindeabschnitts der Spreizschraube auszubilden. Im gesetzten Zustand ragt der Abschnitt der Spreizschraube mit dem grösseren Kerndurchmesser in den Spreizbereich der Dübelhülse, womit sich hohe Spreizkräfte realisieren lassen.

Nachteilig bei dieser Lösung ist, dass im gewindefreien Bereich keine Verzahnung der Spreizschraube mit der Dübelhülse erfolgt, wodurch sich die Befestigung, insbesondere bei Hohluntergründen, wie z. B. in Hohtsteinmauerwerk, bereits bei geringen Lasten lösen kann. In der DE 34 29 585 A1 wird daher eine Spreizschraube für eine aufweitbare Dübelhülse mit einem Schaft vorgeschlagen, der an einem ersten Ende ein Drehangriffsmittel und ausgehend von einem zweiten Ende einen Gewindegang aufweist. In einem Abstand zum zweiten Ende des Schafts weist die Spreizschraube einen Gewindeabschnitt auf, in dem der Gewindegang einen grösseren Aussendurchmesser als im Bereich zwischen diesem Gewindeabschnitt und dem zweiten Ende aufweist. Durch das grössere Gewinde im Bereich des zum zweiten Ende des Schafts beabstandeten Gewindeabschnitts wird eine bessere Verzahnung der Spreizschraube mit der Dübelhülse erreicht und dadurch die Gefahr eines Schraubendurchzugs verringert.

Nachteilig an der bekannten Lösung ist, dass aufgrund dieser Ausgestaltung des Gewindegangs nur ein geringer, für den Anwender kaum wahrnehmbarer Anstieg des Drehmomentes beim Einschrauben der Spreizschraube erfolgt. Weist die Spreizschraube, wie in der DE 34 29 585 A1 gezeigt, an dem ersten Ende des Schafts einen Schraubenkopf auf und ist die Spreizschraube vollständig eingedreht, dreht beim Aufbringen eines weiteren Drehmomentes die Spreizschraube auf der Stelle, wodurch die Dübelhülse bereichsweise zerstört und die erreichbaren Haltewerte reduziert werden. Des Weiteren kann dabei die Vorspannung der Befestigungsanordnung verloren gehen, womit das Anbauteil lediglich nur noch locker am Untergrund festgelegt ist. Zudem erhöht sich bei einem derart ausgebildeten Gewindegang der Aufwand zur Herstellung der Spreizschraube massgeblich.

Aus der US 3,861,269 ist eine Schraube mit einem gestuften Schaft bekannt, wobei in einem querschnittsgrösseren Schaftbereich ein zusätzlicher Gewindegang vorhanden ist. Eine weitere Schraube, bei der die Zahl der Gewindegänge längs des Schaftes variiert, geht aus der DE 30 43 478 A1 hervor.

Aufgabe der Erfindung ist es, eine Befestigungsanordnung mit einer Spreizschraube zu schaffen, wobei die Spreizschraube auch bei der Erzeugung von hohen Spreizkräften sicher in der Dübelhülse gehalten und einfach herstellbar ist

Die Aufgabe ist durch die Merkmale des Anspruchs 1 gelöst. Vorteilhafte Weiterbildungen sind in den Unteransprüchen dargelegt.

Gemäss der Erfindung ist an der Spreizschraube im Bereich des wenigstens einen ersten Gewindeganges im Abstand vom zweiten Ende des Schafts ein Gewindeabschnitt mit zumindest einem weiteren Gewindegang vorgesehen, wobei die axiale Erstreckung des Bereichs zwischen dem Gewindeabschnitt mit dem einen weiteren Gewindegang und dem zweiten Ende des Schafts der Spreizschraube kleiner ist als die axiale Erstreckung des Spreizbereichs der Dübelhülse.

Der vom zweiten Ende des Schafts beabstandete Gewindeabschnitt weist dadurch ein mehrgängiges Gewinde auf. Vorteilhaft ist ein von dem zweiten Ende ausgehender, erster Gewindegang und beabstandet zum zweiten Ende ein weiterer Gewindegang vorgesehen, so dass im Bereich des vom zweiten Ende des Schafts beabstandeten Gewindeabschnitts ein zweigängiges Gewinde ausgebildet ist.

Im Bereich vom zweiten Ende des Schafts bis zum Bereich des vom zweiten Ende des Schafts beabstandeten Gewindeabschnitts, der nur den wenigstens einen ersten Gewindegang aufweist, steht zwischen dem wenigstens einen ersten Gewindegang ausreichend Raum zur Aufnahme von verdrängtem Dübelmaterial zur Verfügung. Der wenigstens eine erste Gewindegang weist über die gesamte axiale Erstreckung der Spreizschraube eine konstante Steigung auf. Sobald das Gewinde am vom zweiten Ende des Schafts beabstandeten Gewindeabschnitt, das zumindest den einen weiteren Gewindegang aufweist, mit der Dübelhülse in Eingriff kommt, steigt das erforderliche Drehmoment zum Eindrehen der Schraube kontinuierlich an. Der wenigstens eine erste Gewindegang greift fortwährend in die von Beginn des Eindrehvorgangs an erstellte Furche ein, während der zumindest eine weitere Gewindegang des vom zweiten Ende des Schafts beabstandeten Gewindeabschnitts eine neue Furche bilden muss. Da zwischen den Gewindegängen im Bereich des vom zweiten Ende des Schafts beabstandeten Gewindeabschnitts weniger Raum zur Aufnahme von verdrängtem Dübelmaterial zur Verfügung steht, wird ein grosser Anteil dieses Materials nach aussen gegen die Bohrlochwandung gepresst, was hohe Spreizkräfte und somit eine sichere Befestigung im Untergrund gewährleistet.

Das Gewinde des vom zweiten Ende des Schafts beabstandeten Gewindeabschnitts schafft zudem eine Verzahnung der Spreizschraube mit der Dübelhülse, wobei gleichzeitig eine grosse Menge des Schraubenmaterials zur Erzeugung hoher Spreizkräfte im Untergrund zur Verfügung steht.

Vorteilhaft reicht der vom zweiten Ende des Schafts beabstandete Gewindeabschnitt im gesetzten Zustand bis in den Spreizbereich der Dübelhülse, so dass der in diesem Bereich vorhandene Querschnitt der Spreizschraube für die Aufweitung des Spreizbereichs und damit zur Erzeugung grosser Spannkräfte zur Verfügung steht. In Hohlbaustoffen erfolgt üblicherweise die Verankerung nur in dem dem Bohrlochmund zugewandten Bereich des Untergrundes, deshalb ist der vom zweiten Ende des Schafts beabstandete Gewindeabschnitt vorteilhaft derart an dem Schaft der Spreizschraube angeordnet, dass im gesetzten Zustand in diesem Bereich die grössten Spreizkräfte aufgebracht werden. Ragt der gewindefreie Bereich des Schafts im gesetzten Zustand ebenfalls in die Dübelhülse hinein, wird gegebenenfalls auch in diesem Bereich der Dübelhülse eine Spreizkraft erzeugt.

Die Spreizschraube ist z. B. aus einem Metall beziehungsweise aus Stahl gefertigt. Beispielsweise wird ein rostfreier Stahl für die Herstellung der Spreizschraube verwendet. Die Spreizschraube kann für ein einfacheres Einschrauben in die Dübelhülse oder zum Korrosionsschutz auch mit einer Beschichtung versehen sein. Die Dübelhülse ist vorteilhaft aus einem Kunststoff gefertigt.

Vorzugsweise weist der zumindest eine weitere Gewindegang den gleichen Aussendurchmesser wie der wenigstens eine erste Gewindegang auf, wodurch die Spreizschraube einfach zu fertigen und leicht in die Dübelhülse eindrehbar ist. Die einfache Fertigung ist durch die, mit Ausnahme des Bereichs des Gewindeauslaufs an der Schraubenspitze am zweiten Ende des Schafts, konstante Ausbildung des Aussendurchmessers gewährleistet. Der gewindefreie Bereich des Schafts zwischen dem vom zweiten Ende des Schafts beabstandeten Gewindeabschnitt und dem Drehangriffsmittel weist vorteilhaft einen Kerndurchmesser auf, der im Wesentlichen dem Aussendurchmesser der Gewindegänge entspricht oder alternativ sogar etwas grösser als der Aussendurchmesser der Gewindegänge ist.

Bevorzugt weist der zumindest eine weitere Gewindegang die gleiche Steigung wie der wenigstens eine erste Gewindegang auf, womit die Gewinde in einem Arbeitsgang gefertigt werden können. Zudem wird durch die gleiche Steigung der Einschraubvorgang der Schraube nicht infolge einer Diskontinuität eines Gewindeganges behindert. Vorteilhaft ist der zumindest eine weitere Gewindegang mittig zwischen dem wenigstens einen ersten Gewindegang angeordnet.

Bevorzugt ist der Flankenwinkel aller Gewindegänge gleich gross, womit ein vorteilhaftes Einschneid- beziehungsweise Eindringverhalten der Gewindegänge in die Wandung der Dübelhülse gewährleistet ist.

Vorzugsweise ist der Kerndurchmesser des Schafts im Bereich des Gewindeabschnitts mit dem zumindest einen weiteren Gewindegang grösser als der Kerndurchmesser des Schafts im Bereich zwischen dem Gewindeabschnitt mit dem zumindest einen weiteren Gewindegang und dem zweiten Ende des Schafts. Dadurch steht im Bereich des Gewindeabschnitts mit dem zumindest einen weiteren Gewindegang eine gegenüber dem vorderen, dem zweiten Ende des Schafts zugewandten Bereich grössere Menge an Schraubenmaterial zur Verfügung, wodurch hohe Spreizkräfte im Bereich des Gewindeabschnitts mit dem zumindest einen weiteren Gewindegang realisierbar sind und die Haltekräfte positiv beeinflusst werden.

Vorzugsweise ist der wenigstens eine erste Gewindegang zumindest im Bereich zwischen dem Gewindeabschnitt mit dem zumindest einen weiteren Gewindegang und dem zweiten Ende des Schafts ein Rundgewinde, das ein leichtes Eintreiben der Spreizschraube in die Dübelhülse zu Beginn des Spreizvorgangs ermöglicht.

Bevorzugt ist wenigstens einer der Gewindegänge zumindest im Bereich des Gewindeabschnitts mit dem zumindest einen weiteren Gewindegang ein Trapezgewinde, das eine gute Verzahnung zwischen der Spreizschraube und der Dübelhülse sicherstellt. Vorteilhaft weist das Trapezgewinde für ein einfaches Einschraubverhalten der Spreizschraube abgerundete Kanten auf. Insbesondere in der Kombination mit einem grösseren Kemdurchmesser im Bereich des vom zweiten Ende des Schafts beabstandeten Gewindeabschnitts ermöglicht das Trapezgewinde eine gute Lasteinleitung über die Spreizschraube in die Dübelhülse. Besonders vorteilhaft sind alle Gewindegänge zumindest im Bereich des Gewindeabschnitts mit dem zumindest einen weiteren Gewindegang Trapezgewinde.

Vorzugsweise ist am ersten Ende des Schafts ein das Drehmitnahmemittel aufweisender Schraubenkopf vorgesehen, der an seiner Unterseite mehrere zueinander beabstandete Erhebungen aufweist. Gegen Ende des Setzvorgangs dringen diese Erhebungen in das freie Ende der Dübelhülse, welche vorteilhaft einen Kragenabschnitt aufweist, ein und schaffen eine zusätzliche Verzahnung mit der Dübelhülse, welche ein Überdrehen der Spreizschraube verhindert.

Eine erfindungsgemässe Befestigungsanordnung weist eine aufweitbare Dübelhülse mit einem Spreizbereich und eine zuvor dargelegte Spreizschraube auf, wobei die axiale Erstreckung des ersten Gewindeabschnitts der Spreizschraube kleiner als die axiale Erstreckung des Spreizbereichs der Dübelhülse ist. Somit steht ein Teil des im Bereichs des Gewindeabschnitts mit dem zumindest einem weiteren Gewindegang vorhandenen Querschnitts der Spreizschraube für die Aufweitung des Spreizbereichs der Dübelhülse und damit zur Erzeugung grosser Spannkräfte zur Verfügung.

Die Erfindung wird nachstehend anhand eines Ausführungsbeispieles näher erläutert. Es zeigen:
- Fig. 1: Eine Seitenansicht auf eine Sprelzschraube zur Verwendung in einer erfindungsgemässen Befestigungsanordnung;
- Fig. 2: einen Detailschnitt gemäss II in Fig. 1; und
- Fig.3: eine erfindungsgemässe Befestigungsanordnung im gesetzten Zustand in einer schematischen Schnittdarstellung.

Grundsätzlich sind in den Figuren gleiche Teile mit den gleichen Bezugszeichen versehen.

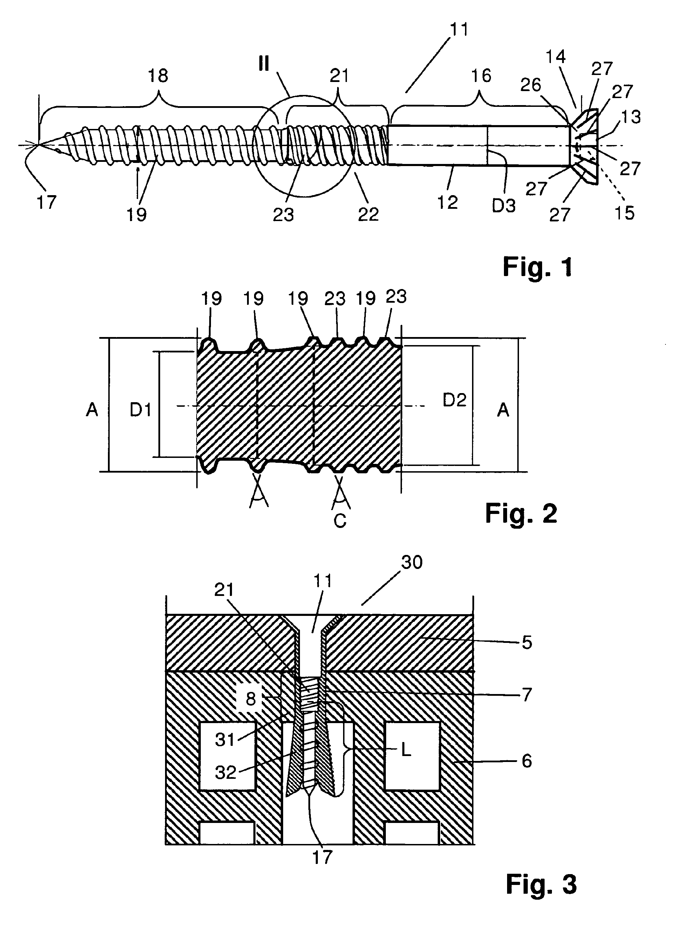

Die in den Figuren 1 und 2 dargestellte Spreizschraube 11 für eine aufweitbare Dübelhülse weist einen Schaft 12 auf, der an einem ersten Ende 13 einen Schraubenkopf 14 mit einem Innensechskant oder Innensechsrund als Drehangriffsmittel 15 und ausgehend von einem zweiten Ende 17 einen ersten Gewindegang 19 mit einer konstanten Steigung aufweist. Mit Ausnahme am Auslauf zum freien Ende 17 des Schafts 12 hin weist der erste Gewindegang 19 einen konstanten Aussendurchmesser A auf. An einem vom zweiten Ende 17 des Schafts 12 beabstandeten Gewindeabschnitt 21 ist zur Ausbildung eines zweigängigen Gewindes 22 im Bereich des ersten Gewindeganges 19 ein weiterer Gewindegang 23 vorgesehen, der den gleichen Aussendurchmesser A und die gleiche Steigung wie der erste Gewindegang 19 aufweist. Der Flankenwinkel C aller Gewindegänge 19 und 23 ist gleich gross.

Der Kerndurchmesser D2 des Schafts 12 ist im Bereich des Gewindeabschnitts 21 mit dem einen weiteren Gewindegang 23 grösser als der Kerndurchmesser D1 des Schaft 12 im Bereich 18 zwischen dem Gewindeabschnitt 21 mit dem einen weiteren Gewindegang 23 und dem zweiten Ende 17 des Schafts 12. Zwischen dem Gewindeabschnitt 21 mit dem einen weiteren Gewindegang 23 und dem Schraubenkopf 14 weist der Schaft 12 einen gewindefreien Bereich 16 auf, dessen Kerndurchmesser D3 im Wesentlichen dem Aussendurchmesser A der Gewindeabschnitte 19 und 21 entspricht. Der erste Gewindegang 19 ist im Bereich 18 zwischen dem Gewindeabschnitt 21 mit dem einen weiteren Gewindegang 23 und dem zweiten Ende 17 des Schafts 12 ein Rundgewinde. Der erste Gewindegang 19 und der eine weitere Gewindegang 23 sind in dem vom zweiten Ende 17 des Schafts 12 beabstandeten Gewindeabschnitt 21 abgerundete Trapezgewinde.

An seiner Unterseite 26 weist der Schraubenkopf 14 mehrere zueinander beabstandete Erhebungen 27 auf, die beim Eindrehen der Spreizschraube 11 mit dem freien Ende der Dübelhülse in Anlage kommen und in diese eindringen. Damit wird eine weitere Verzahnung der Spreizschraube 11 mit der Dübelhülse geschaffen, welche ein Überdrehen der Spreizschraube 11 verhindert.

In der Figur 3 ist eine erfindungsgemässe Befestigungsvorrichtung 30 zur Befestigung eines Anbauteils 5 an einem Hohlziegel 6 als Untergrund mit einer aufweitbaren, einen Spreizbereich 32 aufweisenden Dübelhülse 31 und einer Spreizschraube 11 dargestellt. Die axiale Erstreckung des Bereichs 18 zwischen dem Gewindeabschnitt 21 mit dem einen weiteren Gewindegang 23 und dem zweiten Ende 17 des Schafts 12 der Spreizschraube 11 ist kleiner als die axiale Erstreckung L des Spreizbereichs 32 der Dübelhülse 31.

In den Hohlziegel 6 wird ein Bohrloch 7 erstellt und die Dübelhülse 31 durch eine Öffnung im Anbauteil 5 hindurch in das Bohrloch 7 eingeführt. Anschliessend wird die Spreizschraube 11 eingeschraubt, wobei die Dübelhülse 31 aufgeweitet wird. Der von dem zweiten Ende 17 beabstandete Gewindeabschnitt 21 mit dem einen weiteren Gewindegang 23 ist derart an der Spreizschraube 11 angeordnet, dass im gesetzten Zustand der Befestigungsvorrichtung 30 die grössten Spreizkräfte in dem dem Bohrlochmund zugewandten Bereich 8 des Hohlziegels 6 wirken.

## Patentansprüche

1. Befestigungsanordnung mit einer aufweitbaren Dübelhülse (31) mit einem Spreizbereich (32) und einer Spreizschraube (11) für die aufweitbare Dübelhülse (31),
wobei die Spreizschraube (11) einen Schaft (12) aufweist, der an einem ersten Ende (13) ein Drehangriffsmittel (15) und ausgehend von einem zweiten Ende (17) wenigstens einen ersten Gewindegang (19) aufweist, **dadurch gekennzeichnet, dass**
an der Spreizschraube (11) im Bereich des wenigstens einen ersten Gewindeganges (19) im Abstand vom zweiten Ende (17) des Schafts (12) ein Gewindeabschnitt (21) mit zumindest einem weiteren Gewindegang (23) vorgesehen ist,
und
dass die axiale Erstreckung des Bereichs (18) zwischen dem Gewindeabschnitt (21) mit dem einen weiteren Gewindegang (23) und dem zweiten Ende (17) des Schafts (12) der Spreizschraube (11) kleiner ist als die axiale Erstreckung (L) des Spreizbereichs (32) der Dübelhülse (31).

2. Befestigungsanordnung nach Anspruch 1, **dadurch gekennzeichnet, dass** der zumindest eine weitere Gewindegang (23) den gleichen Aussendurchmesser (A) wie der wenigstens eine erste Gewindegang (19) aufweist.

3. Befestigungsanordnung nach Anspruch 1 oder 2, **dadurch gekennzeichnet, dass** der zumindest eine weitere Gewindegang (23) die gleiche Steigung wie der wenigstens eine erste Gewindegang (19) aufweist.

4. Befestigungsanordnung nach einem der Ansprüche 1 bis 3, **dadurch gekennzeichnet, dass** der Flankenwinkel (C) aller Gewindegänge (19, 23) gleich gross ist.

5. Befesügungsanordnung nach einem der Ansprüche 1 bis 4, **dadurch gekennzeichnet, dass** der Kemdurchmesser (D2) des Schafts (12) im Bereich des Gewindeabschnitts (21) mit dem zumindest einen weiteren Gewindegang (23) grösser als der Kemdurchmesser (D1) des Schafts (12) im Bereich zwischen dem Gewindeabschnitt (21) mit dem zumindest einen weiteren Gewindegang (23) und dem zweiten Ende (17) des Schafts (12) ist.

6. Befestigungsanordnung nach einem der Ansprüche 1 bis 5, **dadurch gekennzeichnet, dass** der wenigstens eine erste Gewindegang (19) zumindest im Bereich zwischen dem Gewindeabschnitt (21) mit dem zumindest einen weiteren Gewindegang (23) und dem zweiten Ende (17) des Schafts (12) ein Rundgewinde ist.

7. Befestigungsanordnung nach einem der Ansprüche 1 bis 6, **dadurch gekennzeichnet, dass** wenigstens einer der Gewindegänge (19, 23) zumindest im Bereich des Gewindeabschnitts (21) mit dem zumindest einen weiteren Gewindegang (23) ein Trapezgewinde ist.

8. Befestigungsanordnung nach Anspruch 7, **dadurch gekennzeichnet, dass** alle Gewindegänge (19, 23) zumindest im Bereich des Gewindeabschnitts (21) mit dem zumindest einen weiteren Gewindegang (23) Trapezgewinde sind.

9. Befestigungsanordnung nach einem der Ansprüche 1 bis 8, **dadurch gekennzeichnet, dass** am ersten Ende (13) des Schafts (12) ein das Drehmitnahmemittel (15) aufweisender Schraubenkopf (14) vorgesehen ist, der an seiner Unterseite (26) mehrere zueinander beabstandete Erhebungen (27) aufweist.

## Claims

1. A fastener assembly comprising an expandable dowel sleeve (31) with an expanding portion (32) and an expansion screw (11) for the expandable dowel sleeve (31), the expansion screw (11) having a shaft (12), which at a first end (13) has means (15) for the application of rotational force and, extending from a second end (17), has at least one first screw thread (19), **characterized in that** provided on the expansion screw (11), in the region of the at least one first screw thread (19) and at a distance from the second end (17) of the shaft (12),
there is a threaded portion (21) having at least one additional thread (23),
and **in that**
the axial dimension of the region (18) between the threaded portion (21) having the additional thread (23) and the second end (17) of the shaft (12) of the expansion screw (11) is smaller than the axial dimension (L) of the expanding portion (32) of the dowel sleeve (31).

2. A fastener assembly according to Claim 1, **characterized in that** the at least one additional screw thread (23) has the same outer diameter (A) as the at least one first screw thread (19).

3. A fastener assembly according to Claim 1 or 2, **characterized in that** the at least one additional screw thread (23) has the same pitch as the at least one first screw thread (19).

4. A fastener assembly according to one of Claims 1 to 3, **characterized in that** the flank angle (C) of all the screw threads (19, 23) is the same.

5. A fastener assembly according to one of Claims 1 to 4, **characterized in that** the core diameter (D2) of the shaft (12) in the region of the threaded portion (21) having the at least one additional screw thread (23) is greater than the core diameter (D1) of the shaft (12) in the region between the threaded portion (21) having the at least one additional screw thread (23) and the second end (17) of the shaft (12).

6. A fastener assembly according to one of Claims 1 to 5, **characterized in that**, at least in the region between the threaded portion (21) having the at least one additional screw thread (23) and the second end (17) of the shaft (12), the at least one first screw thread (19) is a round thread.

7. A fastener assembly according to one of Claims 1 to 6, **characterized in that**, at least in the region of the threaded portion (21) with the at least one additional screw thread (23), at least one of the screw threads (19, 23) is a trapezoidal thread.

8. A fastener assembly according to Claim 7, **characterized in that**, at least in the region of the threaded portion (21) having the at least one additional screw thread (23), all the screw threads (19, 23) are trapezoidal threads.

9. A fastener assembly according to one of Claims 1 to 8, **characterized in that** a screw head (14) is provided at the first end (13) of the shaft (12), said screw head (14) having means (15) for transmitting the rotational force and having on its underside (26) a plurality of protuberances (27) spaced apart from one another.

## Revendications

1. Ensemble de fixation comportant une douille de cheville expansible (31) ayant une zone d'expansion (32), et une vis d'expansion (11) pour la douille de cheville expansible (31),
dans lequel la vis d'expansion (11) présente une tige (12) comportant des moyens de mise en rotation (15) à une première extrémité (13) et au moins un premier filetage de vis (19) partant d'une seconde extrémité (17), **caractérisé ce que**
une partie filetée (21) comportant au moins un filetage de vis supplémentaire (23) est prévue sur la vis d'expansion (11) dans la zone du au moins un premier filetage de vis (19) à distance de la seconde extrémité (17) de la tige (12),
et
en ce que l'étendue axiale de la zone (18) entre la partie filetée (21) comportant le filetage de vis supplémentaire (23) et la seconde extrémité (17) de la tige (12) de la vis d'expansion (11) est plus petite que l'étendue axiale (L) de la zone d'expansion (32) de la douille de cheville (31).

2. Ensemble de fixation selon la revendication 1, **caractérisé en ce que** le au moins un filetage de vis supplémentaire (23) a le même diamètre extérieur (A) que le au moins un premier filetage de vis (19).

3. Ensemble de fixation selon la revendication 1 ou 2, **caractérisé en ce que** le au moins un filetage de vis supplémentaire (23) a le même pas que le au moins un premier filetage de vis (19).

4. Ensemble de fixation selon l'une quelconque des revendications 1 à 3, **caractérisé en ce que** l'angle de flanc (C) de tous les filetages de vis (19, 23) est identique.

5. Ensemble de fixation selon l'une quelconque des revendications 1 à 4, **caractérisé en ce que** le diamètre à fond de filet (D2) de la tige (12) dans la zone de la partie filetée (21) comportant le au moins un filetage de vis supplémentaire (23) est plus grand que le diamètre à fond de filet (D1) de la tige (12) dans la zone entre la partie filetée (21) comportant le au moins un filetage de vis supplémentaire (23) et la seconde extrémité (17) de la tige (12).

6. Ensemble de fixation selon l'une quelconque des revendications 1 à 5, **caractérisé en ce que** le au moins un filetage de vis (19) est un filet rond au moins dans la zone entre la partie filetée (21) comportant le au moins un filetage de vis supplémentaire (23) et la seconde extrémité (17) de la tige (12).

7. Ensemble de fixation selon l'une quelconque des revendications 1 à 6, **caractérisé en ce qu'**au moins un des filetages de vis (19, 23) est un filet trapézoïdal au moins dans la zone de la partie filetée (21) comportant le au moins un filetage de vis supplémentaire (23).

8. Ensemble de fixation selon la revendication 7, **caractérisé en ce que** tous les filetages de vis (19, 23) sont un filet trapézoïdal au moins dans la zone de la partie filetée (21) comportant le au moins un filetage de vis supplémentaire (23).

9. Ensemble de fixation selon l'une quelconque des revendications 1 à 8, **caractérisé en ce que** sur la première extrémité (13) de la tige (12) est prévue une tête de vis (14) comportant des moyens d'entraînement en rotation (15), laquelle tête comporte, sur sa face inférieure (26), plusieurs élévations (27) espacées les unes des autres.
